# EUROPEAN PATENT SPECIFICATION

(11) **EP 3 129 641 B1**
(45) Date of publication and mention of the grant of the patent: **24.07.2019**
(21) Application number: 14888922.3
(22) Date of filing: 07.04.2014
(51) Int. Cl.: F03B 7/00, F03B 17/06

(54) **WATER FLOW ENERGY CONVERTER AND BLADE WHEEL**
WASSERFLUSSENERGIEWANDLER UND SCHAUFELRAD
CONVERTISSEUR D'ÉNERGIE D'ÉCOULEMENT D'EAU ET ROUE À AUBES

(43) Date of publication of application: 15.02.2017
(73) Proprietor: Horvath, Istvan, 1202 Budapest (HU)
(72) Inventor: Horvath, Istvan, 1202 Budapest (HU)
(74) Representative: Kacsuk, Zsófia
(86) International application number: PCT/HU2014/000029
(87) International publication number: WO 2015/155555

(56) References cited:
- WO-A2-2010/082011
- WO-A2-2011/100953
- WO-A2-2013/154421
- RU-C1- 2 161 731
- RU-C1- 2 316 671
- RU-C2- 2 202 048
- US-A- 6 109 863
- US-A1- 2008 309 089

## Description

The subject of the invention relates to water flow energy converter, which has at least one blade wheel that may be installed in a water flow. The subject of the invention also relates to a blade wheel for a water flow energy converter.

Numerous types of water flow energy converters are known of. One of their most important areas of application is their use in hydropower plants, in the case of which the water flow rotates blade wheels and the generators connected to the blade wheel convert the mechanical energy into electric energy.

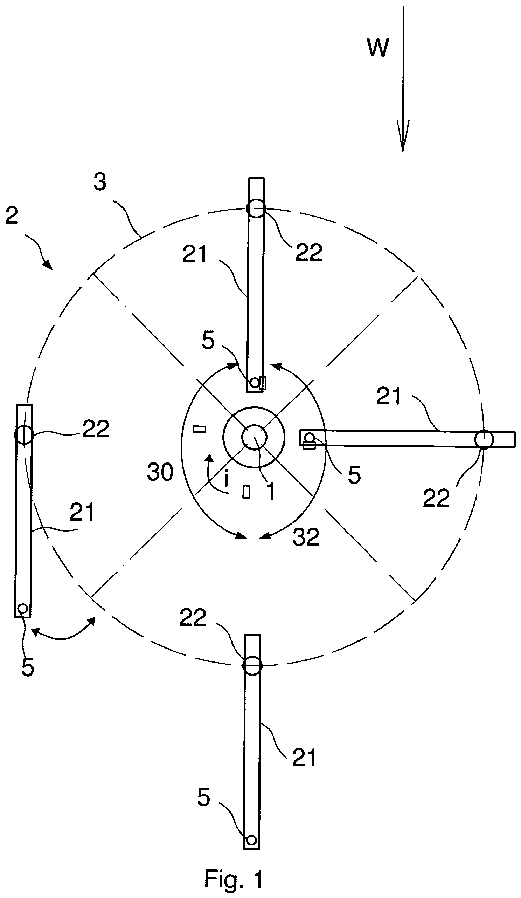

Utility model registration number 2635 U describes a water flow energy converter which has a blade wheel 2 fitted to a vertical main shaft installed in a water flow as illustrated in Figure 1. The blade wheel 2 has four standing blades 21 with work surfaces perpendicular to each other, which in their initial positions are arranged in a radial way around the main shaft along a rim 3.

In plan view the blades 21 may rotate around the axes of rotation 22 in the clockwise direction i, however, they are locked against rotating in the direction opposite to direction i with the help of stop rods 5. As a consequence of the rotatable mounting of the blades 21 the water flow indicated by the arrow W always rotates the blades 21 in the first rotation range 30 of the blade wheel 2 - falling on the left side of the blade wheel diameter that is parallel with the water flow - into a position parallel to the water flow, therefore in this first rotation range 30 the blades 21 do not have a work surface perpendicular to the water flow. However, on arriving in the second rotation range 32 falling on the right side of the blade wheel diameter that is parallel with the water flow, the blades that had been until then parallel with the water flow W, and therefore passive, can no longer rotate around their axis of rotation in the opposite rotation direction, therefore, in the second rotation range 32 the water flow exerts force on the blades 21 proportionate with the blade surface perpendicular to the water flow and so perform work by rotating the blade wheel 2 around the main shaft 1.

Disadvantage of the utility model: it does not take into consideration that due to the differing tangential speed of the water flow due to the rotation of the blade wheel 2, the medium exerts a drag force of differing direction and/or differing magnitude on the different portions of the blades 21. Precisely because of this in the second rotation range 32 where work is performed the ranges of the work surface of the blades 21 more distant from the main shaft 1 do not perform useful work for a time, what is more, the radial fixing of these ranges retards the rotational movement, i.e. reduces the efficiency of the water flow energy converter.

The water flow energy converter according to utility model number 2859 U uses the mechanical energy gained from the water flow for pumping water. An important part of the presented water flow energy converter is a roller wheel-cogwheel rim, which makes it possible for several, an undetermined number of blade wheels 2 known from utility model 2635 U to work together in a mechanical connection and to take off the torque exerted on all the blade wheels 2 from the shaft of any blade wheel 2. This solution may be suitable for increasing the performance obtainable due to the multiplication of the blade wheels 2, however, the disadvantages of the individual blade wheels 2 presented above are still not overcome.

WO 2013/154421 discloses a water flow energy converter having water-guiding means formed by solid side, upper and lower walls that define at least one substantially horizontal flow channel in which blade wheels are arranged for rotation. The solid water-guiding walls of the flow channel disturbs the flow of the river, because at the inlet of the flow channel the water is separated to a portion flowing through the flow channel and a portion flowing outside of the flow channel and the two portions can only mix downstream of the outlet of the flow channel. This can cause turbulences and changes the flow conditions in the vicinity of the water flow energy converter. Consequently, the disclosed water flow energy converter is not environmentally friendly.

The purpose of the invention is to provide a water flow energy converter and blade wheel that is free of the disadvantages of the solutions according to the state of the art and suitable for increasing efficiency.

The invention is based on the recognition that if the useful work surface of the individual blades may be varied in a self-regulating way while the blade wheel is rotating, then with this the drag braking the blade wheel may be reduced and in this way the efficiency of a water flow energy converter using such a blade wheel can be increased.

According to the invention we have solved the task with the water flow energy converter according to claim 1.

Advantageous embodiments of the invention are determined in the dependent claims.

Further details of the invention will be explained by way of exemplary embodiments with reference to the Figure. On the drawings
Figure 1 shows the top view of the theoretical outline of a blade wheel according to the state of the art,
Figure 2 is schematic cross-sectional view of a preferred embodiment of a water flow energy converter according to the invention,
Figure 3 is a schematic top view of the roller wheel-cogwheel connection of the torque transferring system of the water flow energy converter according to Figure 2,
Figures 4a - 4f show the top view of the theoretical outlines illustrating possible arrangements of a torque transferring system containing several torque transferring wheels,
Figure 5 shows a side view of an advantageous protective cover of the water flow energy converter according to the invention,
Figure 6 shows the top view of the protective cover according to Figure 5,
Figure 7 shows a perspective side view of an advantageous embodiment of the blade wheel according to the invention,
Figure 8a shows a perspective side view of the arrangement of two blade wheels according to Figure 7 on a common shaft,
Figure 8b shows a perspective side view of the arrangement of three blade wheels according to Figure 7 on a common shaft,
Figure 9 is a schematic top view of blade systems consisting of various numbers of blade elements arranged along a straight line,
Figure 10 is a schematic top view of blade systems consisting of various numbers of blade elements arranged along a curved line,
Figure 11 shows the operation principle outline of a blade wheel according to the invention,
Figure 12 is a schematic top view illustrating the working side of serially arranged blade wheels.

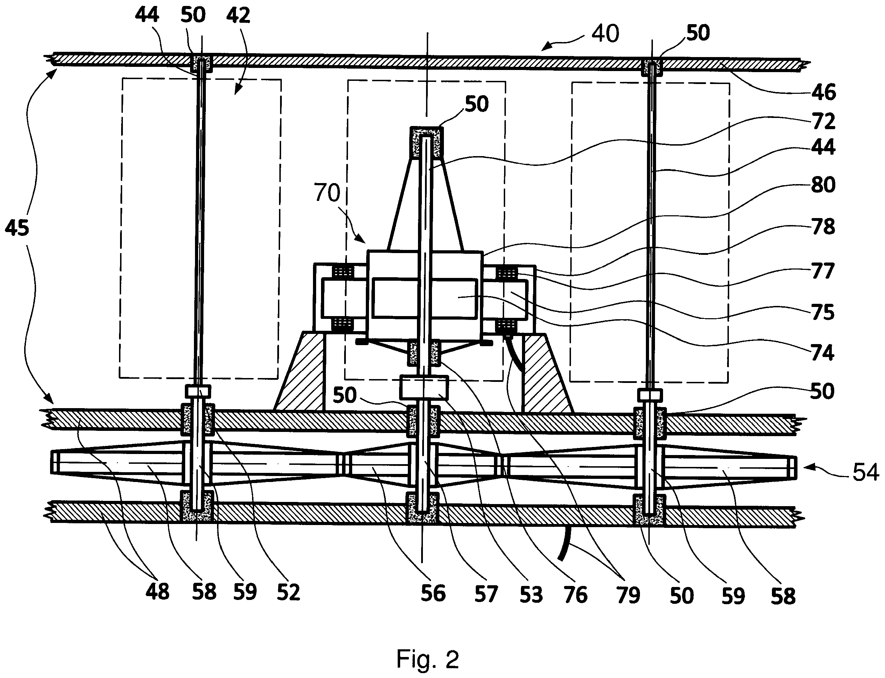

Figure 2 shows an advantageous embodiment of the water flow energy converter 40 according to the invention. The water flow energy converter 40 contains blade wheels 42 indicated with a dotted line, which are fitted onto shafts 44 so that they may rotate with the shaft 44. The water flow energy converter 40 may be installed into a water flow (e.g. in a river, in seawater periodically flowing due to the phenomenon of tides, etc.) so that the shaft 44 of the blade wheel 42 is lateral, advantageously perpendicular, to the water flow. The individual shafts 44 are advantageously arranged between an upper frame portion 46 and lower frame portions 48 forming the frame 45 of the water flow energy converter 40, in such a way that the upper end of the shaft 44 is fixed in the upper frame portion 46 with the help of a bearing 50. The lower end of the shaft 44 passes on the torque resulting from the energy taken from the mass of water displaced by gravity to a torque transferring system 54 of the water flow energy converter 40 via couplings 52, which torque transferring system 54 is located between the lower frame portions 48.

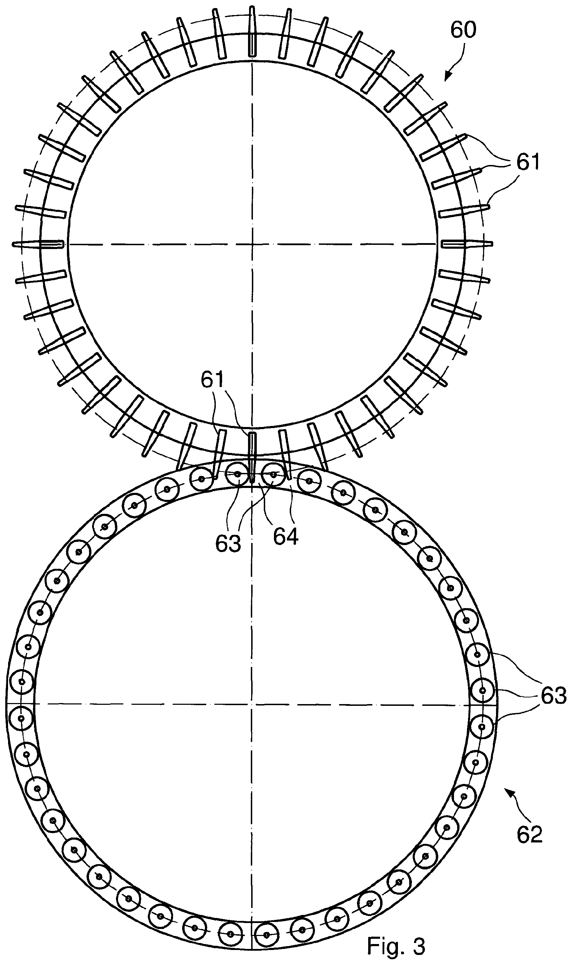

The torque transferring system 54 contains a central wheel 56 combining the torques of the blade wheels 42 with parallel shafts 44, as well as a torque transferring wheels 58 connected to the shafts 44 of the individual blade wheels 42 via couplings 52. The individual torque transferring wheels 58 are connected to the central wheel 56 such as to transfer the rotation. Such a rotation transferring connection is represented, for example, by a known cogwheel connection or by the roller wheel-cogwheel connection known from utility model number 2859 U, the essence of which is that of the central wheel 56 and the torque transferring wheel 58 one is a cogwheel 60 and the other is a roller wheel 62 (see Figure 3). The wheels 56 and 58 are dimensioned such as to allow the cogs 61 of the cogwheel 60 to fit into the clearances 64 between the rollers 63 arranged along the circumference of the roller wheel 62 while the cogwheel 60 is rotating, in other words the cogs 61 turn into the clearances 64 while rotating, and after passing on the torque they exit the clearances 64.

The diameter of the central wheel 56 is advantageously smaller than the diameter of the torque transferring wheels 58, therefore, the rate of rotation of the shaft 57 of the central wheel 56 is greater than the rate of rotation of the shafts 59 connected to the shafts 44 of the blade wheels 42 taking on the mechanical energy. Advantageously the shaft 57 of the central wheel 56, with its greater rate of rotation and torque combining role, is connected and passes on the torque to the main shaft 72 of the generator 70 via coupling 53, and thereby to the rotor 74 fixed to the main shaft 72 and fitted with permanent magnetic poles. In order to ensure both rotation and sealing, advantageously a water sealing ring 76 is fitted at the lower bearing 50 of the main shaft 72 of the generator 70. The stator 75 of the generator 70 contains the electric part, advantageously enamelled wire coils 77. Advantageously the stator 75 of the generator 70 is protected by a separate waterproof cover 78, located on the lower part of which, for example, an electric current output cable 79 is provided. The rotor 74 is also provided with a waterproof cover 80. Advantageously the generator 70 is fixed to the lower frame portion 48, in the most protected part of the water flow energy converter 40. Naturally, a generator 70 with a different structure may also be constructed by a person skilled in the art that may also be suitable for transforming the rotational movement of the torque-combining central wheel 56 into electric energy.

The electric energy induced in the generator 70 brakes the rotation of the main shaft 72 of the generator 70 in proportion with the electric loading, and so, via the torque transferring system 54 connected with it, brakes the rotation of the blade wheels 42 as well. If the electric loading is reduced or terminated the rate of rotation of the shafts 44 of the blade wheels 42 increases, the frequency and voltage of the electricity generated rushes upwards, therefore it is practical to maintain an even electric loading on the generator 70. The electric energy generated by the generator 70 can be taken out through the current output cable 79 (advantageously a swinging cable) to a consumption and regulating connection point constructed for this purpose on a dry area.

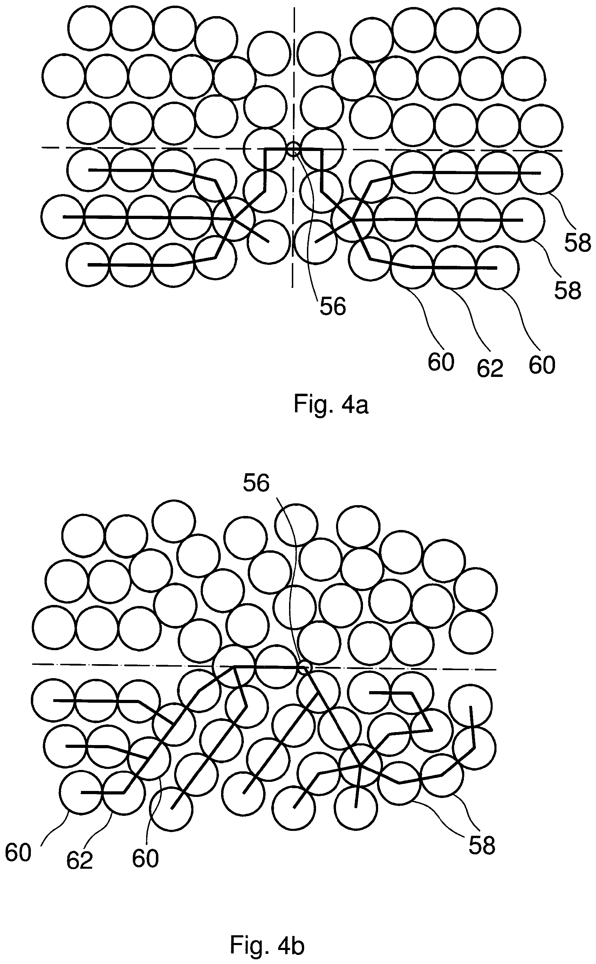

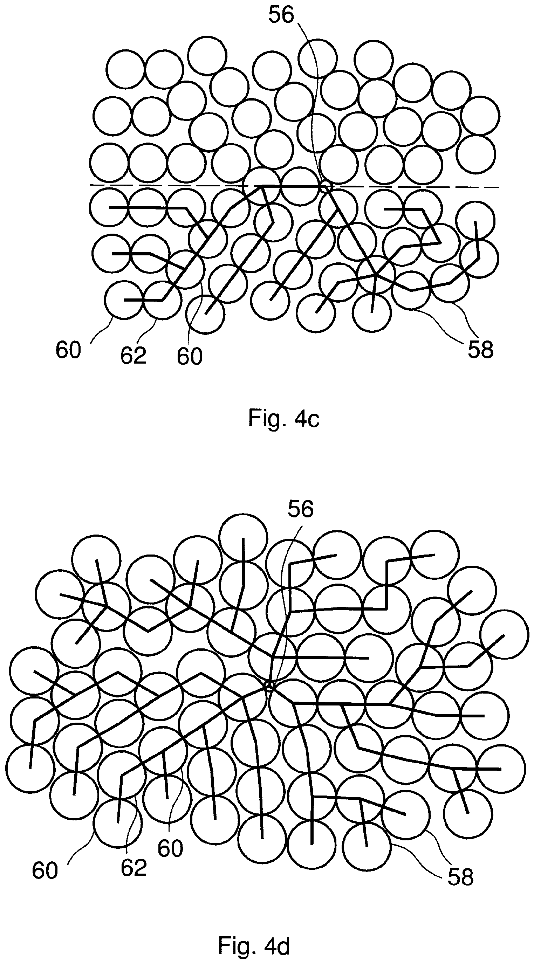

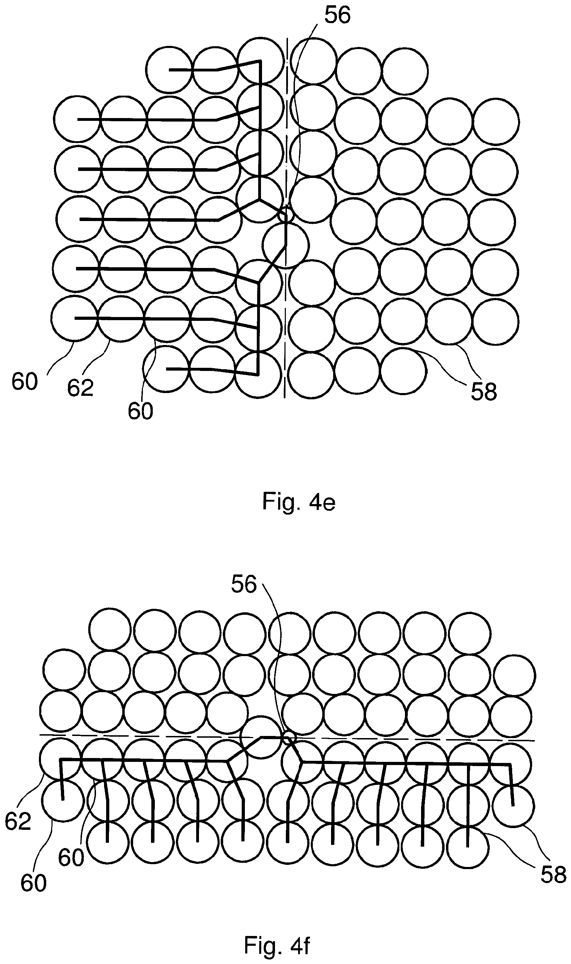

The performance of the water flow energy converter 40 can be increased, among others, by transferring the rotational energy of several blade wheels 42 to the main shaft 72 of the generator 70 via the torque transferring system 54 presented above. In Figures 4a - 4f possible torque transferring systems 54 are presented, which have differing cogwheel 60 and roller wheel 62 arrangements. The cogwheels 60 and the roller wheels 62 pass on the torque of the blade wheels 42 connected via the couplings 52 to the neighbouring roller wheel 62 and cogwheel 60. The main shaft 72 of the generator 70 is connected to the central wheel 56 via the coupling 53, which central wheel 56 may also be a cogwheel 60 or a roller wheel 62 (obviously the neighbouring torque transferring wheel is of the opposite arrangement). Further torque transferring wheels 58 may be connected to the torque transferring wheel 58 connected to the central wheel 56 in such a way that the torque transferring wheel 58 of one of the neighbouring blade wheels 42 is a cogwheel 61, while the other torque transferring wheel 58 is a roller wheel 62. Naturally, the dimensions of the wheels 58 are such that the cogs 61 of the cogwheel 60, while rotating, fit into the clearances 64 between the rollers 63 arranged along the circumference of the roller wheel 62. As it can be seen, a great many variations of the central wheel 56 and the torque transferring wheels 58 can be imagined, of which only a few possible arrangements are illustrated in Figures 4a - 4f merely as examples.

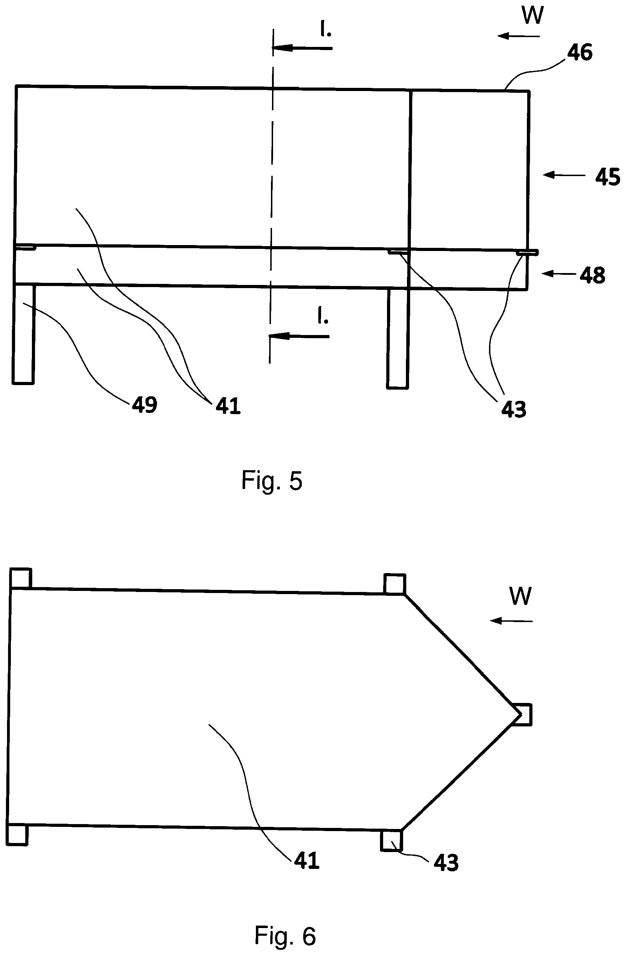

In Figures 5 and 6 it may be observed that the external form of the frame 45 of the water flow energy converted 40 on the water flow side indicated by the arrow W is a triangular prism in order to divert the contamination flowing with the water flow and floating in the water.

The upper frame portion 46 is mounted on the lower frame portion 48 of the frame 45, to which a protective cover 41 surrounding the blade wheels 42 from the outside is fixed (see Figures 5-6). The protective cover 41 advantageously contains a protective net or grid, which protects the water flow energy converter 40 from contamination slipping in between the blades, as well as from damage caused by large pieces of floating contamination.

The lower frame portion 48 of the water flow energy converter 40 ensures the statics stability of the water flow energy converter 40, it encompasses the mechanical torque transferring system 54 comprising one or more cogwheels 60 and one or more roller wheels 62 fitted on the shafts 57 and 59 mounted rotatably in the bearings 50. Furthermore, feet 49 supporting the water flow energy converter 40 at a distance from the channel (river) bed are also connected to the lower frame portion 48, therefore the contamination flowing along the channel bed is able to pass under the water flow energy converter 40 installed on the channel bed (see Figure 5). The length of the feet 49 is selected such that the upper frame portion 46 of the water flow energy converter 40 lies deeper than the lowest occurring water level so that the contamination floating on the water surface, ice floes and similar endangering factors do not affect the water flow energy converter 40, and, furthermore, such that the water flow energy converter 40 does not affect surface shipping.

Preferably, the water flow energy converter is fixed with wire cables to the channel bed in order to overcome the effects of water drag, and, furthermore, so that the water flow energy converter 40 stands stably on its feet 49. Preferably, connection tabs 43 are provided on the lower frame portion 48 for the fixing of the water flow energy converter 40 with wire cables.

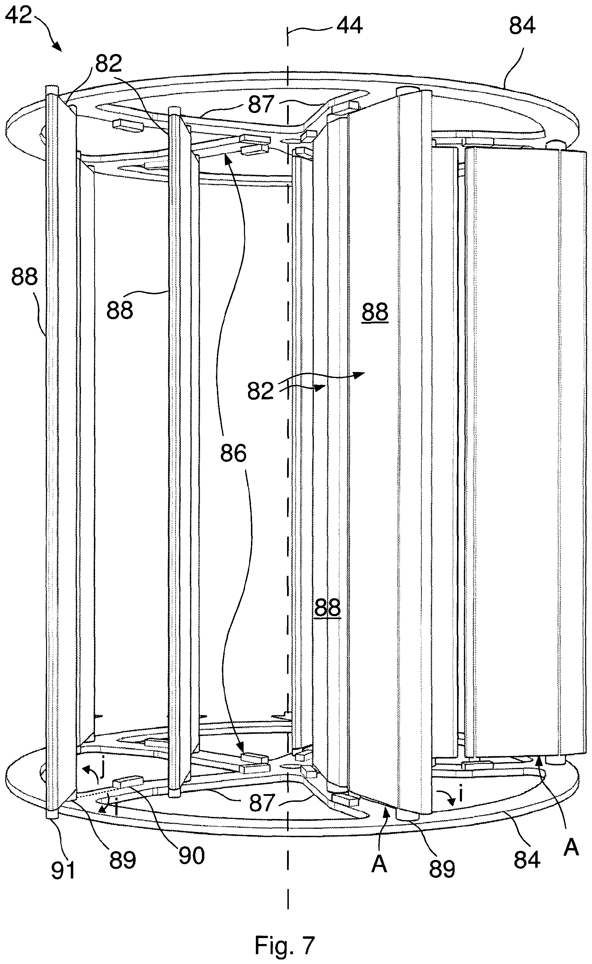

As an example a theoretical outline of the blade wheel 42 can be seen in Figure 7, which may be fitted to the shaft 44 of the water flow energy converter 40 according to Figure 2 in the position indicated by a dotted line. At least two blade systems 82 are arranged on the blade wheel 42, in the case of the present embodiment five blade systems 82 are provided along individual spoke pairs 86 belonging to the lower and upper rim 84 of the blade wheel 42. Every blade system 82 contains at least two blade pieces 88 arranged in a line, which are mounted on axles 89 parallel to the shaft 44 of the blade wheel 42 in such a way that every blade piece 88 may freely rotate from its initial position A in a first rotation direction i around its own axis, while it is fixed against rotating in the opposite direction, i.e. rotation direction j. In Figure 7 the blade pieces 88 of the blade systems 82 fitted between the right-side spoke pairs 86 can be seen in initial position A, which corresponds to the closed state of the blade pieces 88, while the blade pieces 88 of the blade systems 82 fitted between the left side spoke pairs 86 can be seen in their open state (from where, obviously, they may be rotated back in the second rotation direction j to the closed initial position A).

In the case of the present embodiment the axles 89 are fixed between the spokes 87 of the spoke pairs 86 running above one another, favourably with the help of bearings. (Not shown) Naturally, the axles 89 are not necessarily provided between the spoke pairs 86, but can be mounted in numerous other ways as well, for example, instead of the rim 84 indicated in Figure 7, between concentric rings of an other type of rims containing such concentric rings above and below the axles 89, or instead of the rim 84 indicated in Figure 7 between points above one another of lower-upper solid plates delimiting the blade wheel 42, and in many other ways that are obvious for a person skilled in the art. In the case of the present embodiment, securing the blade pieces 88 against rotation in the second rotation direction j in the initial position A is ensured with the help of stops 90 and 91 provided on the spokes 87 and on the lower and upper edges of the blade pieces 88. However, it will be apparent to a person skilled in the art that numerous other fixing methods may be realised, for example, form fitting or locking engagement may be realised as well.

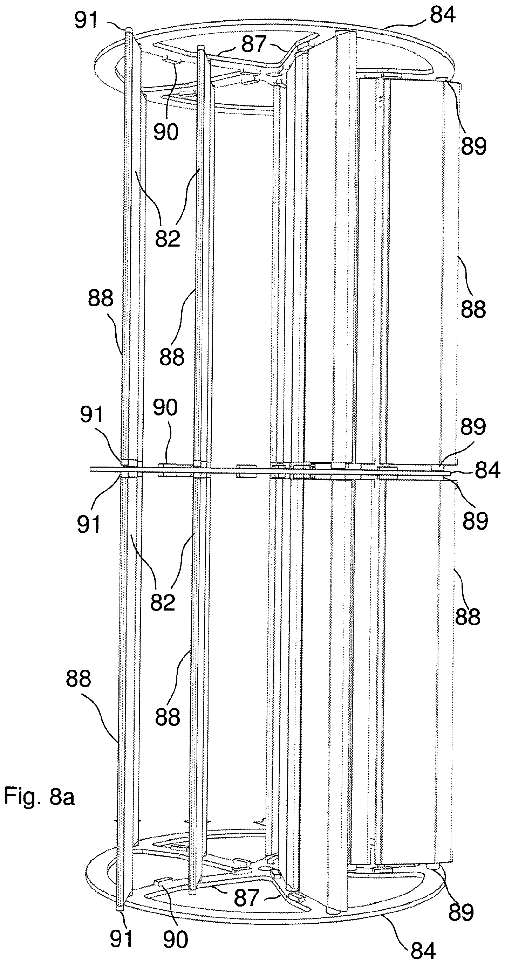

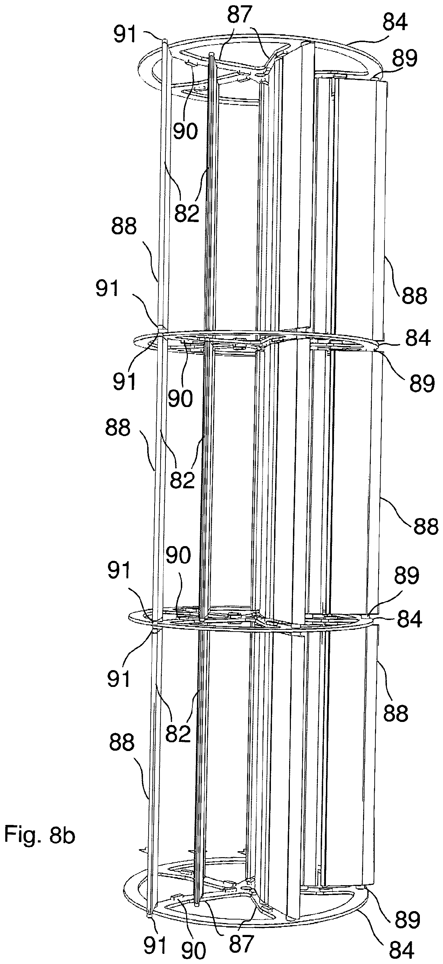

In the interest of increasing the efficiency of the water flow energy converter and if the depth of the river or other water (e.g. coastal water) permits it, several blade wheels 42 may be fitted to every shaft 44, for example two blade wheels 42, as can be seen in Figure 8a, or three blade wheels 42, as can be seen in Figure 8b, and similarly four or more blade wheels 42 may be arranged on the shaft 44. In such cases the axles 89 of the blade pieces 88 as well as the stops 90 may be fixed with the help of a common central rim 84 and its spokes 87.

The blade pieces 88 belonging to one blade system 82, in their initial position A, are preferably positioned along a straight, curved or polygonal line, or a combination of these, linking the shaft 44 with a point on the circumference of the blade wheel 42. In the case of the embodiment illustrated in Figures 7, 8a and 8b the spokes 87 essentially determine a radial polygonal line, therefore the blade pieces 88 of the blade systems 82 are also essentially located along a radial polygonal line. Advantageously, the blade elements 88 are located along such a straight, curved or polygonal line, or a combination thereof wherein the points of the line are at a monotonously increasing distance from the direction of the shaft 44. Such a line, for example, is a radial straight line or a substantially radial straight line or curved or polygonal line, but it may also be a spiral line being a type of curved or polygonal line.

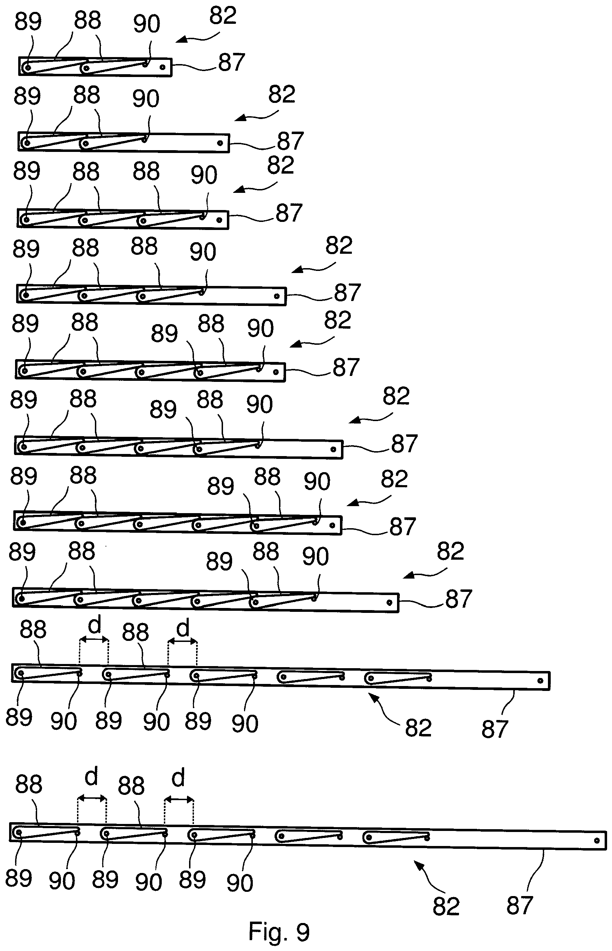

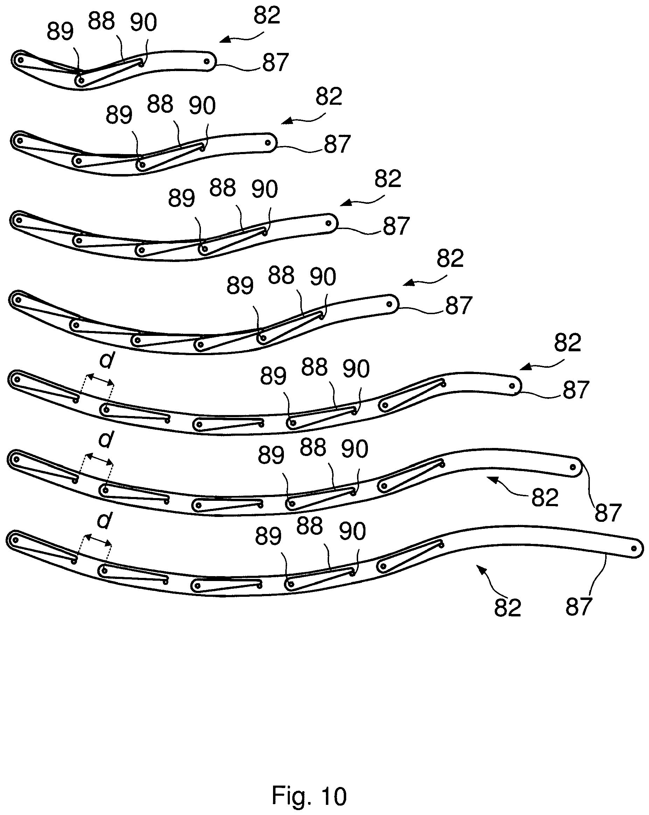

Figures 9 and 10 illustrate various possible blade systems 82, the blade elements 88 of which are arranged along a straight line (see Figure 9), or along a curved line (see Figure 10) in the closed initial position A. As it can be seen, the blade systems 82 may contain differing numbers of blade pieces 88 (even significantly more blade pieces 88 than the number shown in the figures, however, preferably less than one hundred blade pieces 88). In the case of certain blade systems 82 it may be observed that the neighbouring blade pieces 88 are separated from each other by a spacing d (see Figure 9). In such cases the free ends of the blade pieces 88 in the closed initial position A may be in contact with the stops 91 preventing rotation in the second rotation direction j, or locked in any other way. As opposed to this, in the case of other blade systems 82 the neighbouring blade pieces 88 are arranged so as to be connected to each other in such a way that in the closed initial position A the free end of the blade piece 88 further away from the shaft 44 of the blade wheel 42 rests on the fixed end of the neighbouring blade piece 88 closer to the shaft 44 of the blade wheel 42, which fixed end is fixed by the axle 89 of the blade piece 88. In other words, the blade piece 88 located further away from the shaft 44 is secured against rotation in the second rotation direction j with the help of the neighbouring blade piece 88 arranged closer to the shaft 44. Naturally, the fixing of the first blade piece 88 being closest to the shaft 44 of the blade wheel 42 is ensured by a separate fixing element in such cases as well, for example, with the help of the stops 90 and 91.

Furthermore, as can be observed in Figures 9 and 10, a section of the spoke 87 of varying length may remain free between the shaft 44 of the blade wheel 42 and the first (innermost) blade piece 88, in other words it is not essential for the blade system 82 to extend until the shaft 44. This especially has significance when a large number of blade systems 82 (e.g. over ten) is used, as in such case there would not be sufficient space for the inner blade pieces 88 (close to the shaft 44) to rotate freely. An embodiment may be conceived that has a large number of blade systems 82 wherein some individual blade systems 82 contain blade pieces 88 adjacent the shaft 44, while other blade systems 82 do not, whereby the fewer number of inner blade pieces 88 do not obstruct one another when rotating.

The blade pieces 88 arranged along a curved line (curved spokes 87), as shown in Figure 10, may also be positioned at varying distances both from one another and from the shaft 44 of the blade wheel 42. It may also be observed that in both directions the curved line (and, similarly, the polygonal line as well) may contain convex and concave sections as well, and so determine an essentially radial wave line (as opposed to a spiral line, as curved line, that is convex on the one side and concave on the other side, which is also a possible arrangement).

The width of the blade pieces 88 is advantageously between 40 mm and 400 mm, their length is advantageously between 50 cm and 1 m. The number of blade systems 82 (which may be equal to the number of spoke pairs 86) is at least two, advantageously at least four, but by increasing the diameter of the blade wheel 42 there may be increasingly more (but advantageously not more than one hundred) blade systems 82 leaving an appropriate distance between the innermost blade pieces 88 of the blade systems 82 and the shaft 44 of the blade wheels 42, as explained previously.

In the case of the embodiments shown in Figures 7, 8a and 8b, the blade pieces 88 are flat plates, while in the case of the embodiments illustrated in Figures 9 and 10 the blade pieces 88 are drop-shaped pieces that become thinner at their free end. The individual blade pieces 88 may have other kind of curved shapes that is advantageous from the point of view of the concrete application (for example, a plate bent into a gentle C-shaped curve, or other curved plate), as is obvious to a person skilled in the art. It is also conceivable that there are differently shaped blade pieces 88 within a single blade system 82, for example, the shape of the inner blade pieces 88 (closer to the shaft 44) is flat, while the outer blade pieces 88 are drop-shaped or other streamlined, curved pieces, or even vice versa. Apart from this, the blade pieces 88 may be rigid (for example, made from aluminium plate or stainless steel) or flexible (they may be made, for example, from soft plastic, silicon or other, flexible waterproof material).

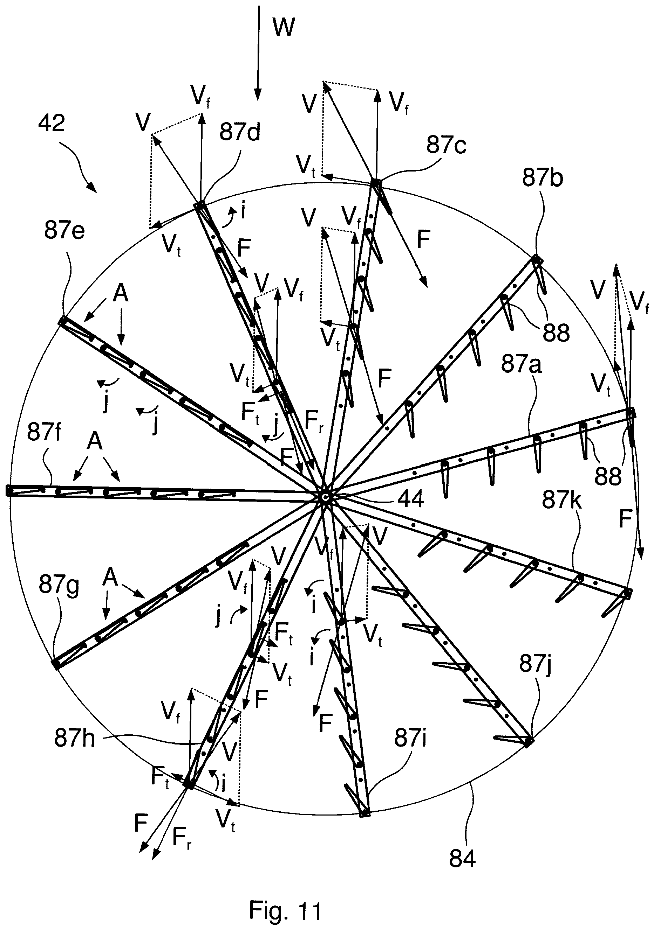

In the following the operation of the blade wheel 42 and water flow energy converter 40 will be presented with the help of Figure 11.

In Figure 11 the schematic outline of the operation of an exemplary blade wheel 42 placed in a water flow indicated with the arrow W can be seen. In the interest of better understanding an embodiment is shown that contains a large number of blade systems 82, in this way the status of the blade pieces 88 may be observed in various positions of the spokes 87 with respect to the water flow.

The position of the blade pieces 88 is determined by the torque of the forces exerted on them; in the positions differing from the closed initial position A, this means primarily the torque of the drag force F caused by the water flow, which is balanced by the torque of the pressure force (not shown) exerted by the stop 90 in the closed initial position A. The size and direction of the drag force F depends on the relative speed of the blade elements 88 moving in the water flow as medium. The latter may be modelled in such a way that it is made up from two main components: from the tangential speed Vt of the blade piece 88 deriving from the rotation of the blade wheel 42, and from the speed Vf deriving from the speed of the water flow, taken into consideration with opposite sign. The tangential speed Vt and the speed Vf relative to the water flow must be summed as vectors, therefore, due to the magnitude of the tangential speed Vt increasing in the radial direction and its direction depending on the position of the given spoke 87, in practice every blade piece 88 will have a different resulting relative speed V. As an example, Figure 11 shows the speed components at the ends of the blade pieces 88 fixed to the axles 89 (in other words, the tangential speed Vt and the speed Vf relative to the water flow), as well as the resulting relative speed V for a number of blade pieces 88. It is clear that the speed of the blade pieces 88 changes from point to point along the blade piece's 88 edge that is perpendicular to the axle 89, however, in order to illustrate the operation, indicating the relative speed V of a point on the axle 89 will suffice. The drag force F is a vector pointing in the opposite direction to the speed V, and its magnitude is proportionate with the magnitude of the speed V. It is clear that due to the speed V varying from point to point, the drag force F also varies from point to point, however, if the direction of the drag force F is not such as to force the blade piece 88 into the closed initial position A, then the blade element 88 turns into the direction of the resulting drag force F, as vector, calculated at the axle 89 (as can be observed in Figure 11 in the case of the right-side spokes 87), whereby the drag force F has no more torque. Due to this, in the case of blade pieces 88 that are not in the initial position A (i.e. passive from the point of view of performing work) the drag force F is determined from the speed vector V determined at the axle 89, and its point of application is placed on the axle 89. In the case of blade pieces 88 in the initial position A, the magnitude and direction of the drag force F is also determined from the relative speed V appearing at the axle 89, however, for reasons of simplicity, its point of application is assumed to be at the middle of the blade piece 88. It is clear that the precise magnitude and direction of the drag force F may be determined by integral calculation, however, in order to illustrate the operation of the blade wheel 42 the simpler model used here is sufficient.

In the case of the spokes 87 falling in the upper range of the blade wheel 42, progressing from right to left in the Figure it can be observe that the blade pieces 88 on the first spoke 87a are substantially parallel with the direction of the water flow (in other words the tangential speeds Vt are essentially parallel with the the speed Vf vector relative to the water flow, so the resulting speed V and the drag force F are substantially also parallel with the speed Vf). The blade pieces 88 arranged on the second spoke 87b are in a more closed position (closer to the initial position A), as here the tangential speed Vt resulting from the rotation of the blade wheel 42 is at a greater angle with the speed Vf relative to the water flow. The drag force F exerted on the blade pieces 88 arranged along the spoke 87c approaches the radial direction even more (in other words the radial direction connecting the given point with the shaft 44 of the blade wheel 42). The direction of the drag force F exerted on the outermost blade element 88 on the spoke 87d is such that would rotate the blade piece 88 in the first rotation direction i relative to the radial direction, whereby this blade element 88 rests in the direction of the drag force F. As opposed to this, the drag forces F (of which we have shown one as an example with an application point located at the middle of the innermost blade piece 88) exerted on the inner blade elements 88 of the spoke 87d (that are closer to the shaft 44) have such a direction that the tangential force component Ft of the force F would rotate the blade element 88 around the axle 89 in the second rotation direction j, however the blade element 88 is locked against rotation in this second direction j (while the radial force component Fr of the drag force F does not exert torque). As a result of the tangential force component Ft the stop 91 of the inner blade piece 88 abuts the appropriate stop 90 of the spoke 87d, and the blade piece 88 stays in the closed initial position A. This is the working position of the blade pieces 88, as in the fixed initial position A the water flow is able to exert force on the blade pieces 88, perform work on them, and thereby transfer mechanical rotational energy and thus rotate the blade wheel 42. On the following spokes 87e - 87g every blade piece 88 is in the initial position A, hence the water flow performs work on these blade pieces 88. On the spoke 87h the tangential force component Ft of the drag force F exerted on the outermost blade piece 88 exerts torque in the first rotation direction i, therefore this blade piece 88 starts to open and is gradually rotated in the direction of the drag force F (in other words the resulting speed V), until, finally, the water flow no longer performs work on the blade piece 88 (passive position). Due to the early opening of the blade piece 88, this edge blade piece 88 provides less resistance to the rotation of the blade wheel 42 than the same blade portion would in the case of an undivided blade according to the state of the art. The tangential force component Ft of the drag force F exerts torque on the blade pieces 88 located further in on the spoke 87h still in the second (closing) rotation direction j, so these blade pieces 88 remain in closed position (in other words in the initial position A) and continue to ensure the water flow work performance. The blade pieces 88 on spokes 87i - 87k closer to the shaft 44 also gradually open on the effect of the tangential force components Ft rotating in the now opening rotation direction i, which decreases the now braking work performed by the water flow.

In summary it can be determined that the water flow (for example, the water mass moved by gravity in a river) makes the blade wheel 42 of the water flow energy converter 40 rotate through the mechanism described above, and the rotation energy is passed on to the generator 70 with the help of the couplings 52 and the torque transferring system 54, in other words every mechanically connected blade wheel shaft 44 is a drive shaft the torque of which rotates the main shaft of the generator 70.

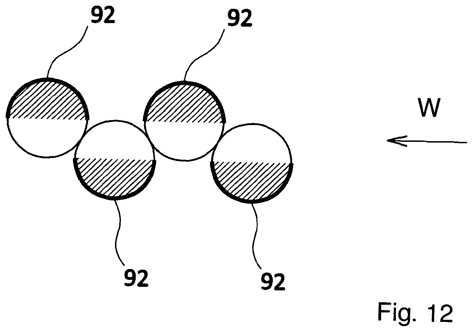

In the case of the serial connection of several blade wheels 42, it is practical to install the consecutive blade wheels 42 with alternating working sides 92 (indicated with a bold line) in the water flow indicated with the arrow W as can be seen in Figure 12, in other words the blade pieces 88 get into the closed initial position A on the one side of the one blade wheel 42, and on the opposite side of the neighbouring blade wheel 42. This arrangement is advantageous because the blade pieces 88 in the initial position A providing the work surface brake the flowing mass of water, and generate smaller vortexes. According to the inventor's observations a distance of approximately one blade wheel radius is sufficient for the water flow to relax (i.e. for the water to speed up again and for the vortexes to disappear). The working side 92 will be on the left or right side as compared to the water flow depending on which is the first rotation direction i around the axle 89 of the individual blade pieces 88 in which the blade piece 88 may rotate freely, and which is the second rotation direction j in which the blade pieces 88 are locked against rotation. In the case of the present embodiment the latter depends on which side of the stop 90 the blade piece 88 is fitted on.

According to the above considerations, the operation of an exemplary water flow energy converter 40 installed in a river as a water flow is the following. A mass of water flowing in a straight line at a speed Vf characteristic of a given section of a river flows through the net or grid-like protective cover 41 of the water flow energy converter 40 and drives the blade wheels 42 to be found therein by exerting a pressing force on the blade pieces 88 in their work-performing initial position A.

As a result of the pressing force exerted on the blade pieces 88 in the initial position A the blade wheels 42 perform a rotating movement. The rate of rotation of the blade wheels 42 is advantageously low, between 5-10 rpm. The blade wheels 42 pass on the rotational movement to the torque transferring wheels 58 connected to the blade wheels 42, which in the case of the present embodiment are cogwheels 60 or roller wheels 62. The cogwheels 60 and the roller wheels 62 form a rim wheel, which makes it possible for several, an undetermined number of blade wheels 42 to work together in a mechanical connection (which is visible in the case of the arrangements illustrated in Figures 4a - 4f), whereby the multiplied energy exerted on all the blade wheels 42 can be taken out of the system in the form of torque with the help of the central wheel 56 driving the main shaft 72 of the generator 70. (By using a plurality of generators 70 the produced electrical energy may be added up in a known way.)

The total torque created in this way drives the main shaft 72 of the generator 70 with the help of the central wheel 56 and the coupling 52 connected to it, and with it the rotor 74 of the generator 70, on the effect of which voltage is induced in the coils 77 to be found in the stator 75 of the generator 70. Advantageously the generator 70 is a slowly rotating submersible generator with a high pole number, conform to the operation of the water flow energy converter 40.

Preferably the electric energy produced by the generator 70 is transferred to the receiving station located on the river bank via aerial and ground cables 79, which then may be used in off-the-grid operation mode or may be connected to the local or national electricity grid via a grid backfeeding meter.

The voltage induced in the generator 70 brakes the rotation of the main shaft 72 in proportion with the electrical loading, therefore, brakes the rotation of the blade wheels 42 as well via the torque transferring system 54. If the electrical load is reduced or terminated the rate of rotation of the shafts 44 of the blade wheels 42 increases, the frequency and voltage of the produced electricity jumps up, therefore, it is advantageous if the electric loading of the generator 70 is kept constant, in other words the water flow energy converter 40 must be equally loaded in winter and summer, at day and night.

In case the demand for electric energy at the place of consumption is greater than the nominal output of the water flow energy converter 40, the increased demand of the consumer can be automatically supplemented from the grid (for example from the national electricity grid), or, in the case of off-the-grid operation mode, from the consumer's own energy store.

When the consumer consumes less than the nominal output of the water flow energy converter 40 then it is preferred to maintain the voltage, the frequency and the rate of rotation of the generator 70 either with automatic artificial loading (this may be, for example, hydrogen production) and at the same time store energy for off-the-grid operation mode; or the surplus of electric energy produced can be put onto the local or national electrical grid through a grid feedback meter.

When planning the water flow energy converter 40 it has to be taken into consideration that in nature the mass of water moved by gravity flows through various river sections in varying circumstances, in the river bed the water depth varies as does the bed width and the flow rate. As a result of this after examining the installations site, the individual parameters of the water flow energy converter 40 must be planned with regard to the speed of the flowing water: the water flow energy converter's 40 height, width and length, the number and diameter of the blade wheels 42, the number of blade systems 82 to be mounted on the individual blade wheels 42, and the number of blade pieces 88 belonging to a blade system 82, as well as their size and shape, furthermore, all this must be brought into harmony with the demand for electric energy to be produced. On the basis of the teachings of the present description and the knowledge of a person skilled in the art the listed planning work may be easily performed by a person skilled in the art, the planning being a routine task not requiring an inventive step.

The water flow energy converter 40 may not only be installed in rivers, but in other artificial or natural or even temporary water flows, for example, on the coast, making use of the water flow periodically appearing due to the phenomenon of tides.

The water flow energy converter 40 is an environmentally friendly piece of equipment, which transforms the water flow energy of natural waters into useful work, i.e. electricity. The water flow energy converter 40 may be installed in river beds or in the beds of other waters under the water surface in a way that is invisible from outside, in this way it does not influence the landscape either.

Due to the large size of the water flow energy converter 40 it is advantageously assembled from basic units in the interest of easy transporting, which units may be assembled at the site and then sunk into the river or other water flow. If required the water flow energy converter 40 maybe removed from the river bed, disassembled and transported once again, in other words it is portable.

Naturally, the water flow energy converter cannot only be used for electricity production. By connecting other machines or energy-transforming machines (e.g. compressor) instead of the generator 70 to the main shaft 72, in an example which is not part of the invention, the water flow energy converter 40 may serve as the motor of a pump, as the motor of irrigation equipment or as the motor of water cleaning equipment, etc.

Various modifications to the above disclosed embodiments will be apparent to a person skilled in the art without departing from the scope of protection determined by the attached claims

## Claims

1. Water flow energy converter (40) having at least two blade wheels (42) suitable for mounting in a water flow (W), at least two blade systems (82) are arranged on each blade wheel (42), each blade system (82) comprises at least two blade pieces (88) arranged in series, and the at least two blade pieces (88) are mounted on rotation axles (89) that are parallel with the shaft (44) of the blade wheel (42) and are spaced from the blade wheel's (42) shaft (44) by different distances such as to allow rotation of the blade pieces (88) around the rotation axles (89) in a first rotation direction (i) with respect to an initial position (A) and to block counter rotation in a second counter rotation direction (j) comprising a generator (70) suitable for underwater operation and comprising a frame (45), and the at least two blade wheels (42) and the generator (70) are arranged inside the frame (45), and the frame (45) is provided with feet (49) for supporting the water flow energy converter (40) at a distance from a channel, in particular a river, bed and the length of the feet (49) is selected such that the water flow energy converter (40) does not affect surface shipping and an upper frame portion (46) of the frame (45) lies deeper than the lowest occurring water level of the channel, in particular the river, **characterised in that** a net or grid-like protective cover (41) is fixed on the frame (45) so as to surround the blade wheels (42) from the outside.

2. The water flow energy converter according to claim 1, **characterised in that** the blade pieces (88) of the same blade system (82) are arranged, in their initial position (A), along a straight, curved or polygonal line connecting the shaft (44) of the blade wheel (42) with a perimetric point of the blade wheel (42).

3. The water flow energy converter according to claim 1 or 2, **characterised in that** the neighbouring blade pieces (88) belonging to the same blade system (82) are arranged such that they are at a distance from each other, and in the initial position (A) the free ends of the blade pieces (88) are abutting fixing elements, advantageously stops (90), that block rotation in the second rotation direction (j).

4. The water flow energy converter according to claim 1 or 2, **characterised in that** the neighbouring blade pieces (88) belonging to a single blade system (82) are arranged connected to one another in such a way that in the initial position (A) the free end of the blade piece (88) further away from the shaft (44) of the blade wheel (42) abuts the neighbouring blade element (88) closer to the shaft (44) of the blade wheel (42) at the end fixed to the axle (89).

5. The water flow energy converter according to any of claims 1 - 4, **characterised in that** the blade pieces (88) are rigid or flexible planar plates or curved plates.

6. The water flow energy converter according to any of claims 1 - 4, **characterised in that** the blade pieces (88) are drop-shaped pieces that are thinner at their free end.

7. The water flow energy converter according to any of claims 1 - 6, **characterised in that** at least two blade wheels (42) are mounted on the shaft (44) of one blade wheel (42).

8. The water flow energy converter according to any of claims 1 - 7, **characterised in that** it contains at least two blade wheels (42) with parallel shafts (44) arranged at a distance from one another as well as a torque transferring system (54) combining the torques of the blade wheels (42), the torque transferring system (54) contains a central wheel (56) and torque transferring wheels (58) the axes of which coincide with axes of the shafts (44) of the individual blade wheels (42) and which are driven by the individual blade wheels (42) and are connected to the central wheel (56) in a rotational motion transferring manner.

9. The water flow energy converter according to claim 8, **characterised in that** of the central wheel (56) and the torque transferring wheel (58) one is a cogwheel (60) and the other is a roller wheel (62), and the wheels (56, 58) are dimensioned in such a way that cogs (61) of the cogwheel (60), while rotating, fit into clearances (64) between rollers (63) arranged along the circumference of the roller wheel (62).

10. The water flow energy converter according to claims 8 or 9, **characterised in that** the central wheel (56) is installed such that it drives the main shaft (72) of a generator (70).

11. The water flow energy converter according to any of claims 1 - 10, **characterised in that** it contains at least two blade wheels (42), arranged in series, with parallel shafts (44) and contains torque transferring wheels (58) connected to one another and driven by the individual blade wheels (42), and the torque transferring wheel (58) of a first blade wheel (42) from two subsequent blade wheels (42) arranged serially is a cogwheel (60) while the torque transferring wheel (58) of the second blade wheel (42) is a roller wheel (62), and the wheels (58) are dimensioned in such a way that cogs (61) of the cogwheel (60), while rotating, fit into clearances (64) between rollers (63) arranged along the circumference of the roller wheel (62).

12. The water flow energy converter according to any of claims 8 - 11, **characterised in that** at least two blade wheels (42) are mounted on the shaft (44) of one blade wheel (42) such as to drive a common torque transferring wheel (58), the axis of which coincides with the axis of the shaft (44) of the blade wheel (42).

## Patentansprüche

1. Wasserflussenergiewandler (40), der mindestens zwei Schaufelräder (42) aufweist, die zum Montieren in einem Wasserfluss (W) geeignet sind, wobei mindestens zwei Schaufelsysteme (82) an jedem Schaufelrad (42) angeordnet sind, wobei jedes Schaufelsystem (82) mindestens zwei in Reihe angeordnete Schaufelstücke (88) umfasst und die mindestens zwei Schaufelstücke (88) auf Rotationsachsen (89) montiert sind, die parallel zu der Welle (44) des Schaufelrads (42) sind und von der Welle (44) des Schaufelrads (42) durch unterschiedliche Abstände beabstandet sind, um Rotation der Schaufelstücke (88) um die Rotationsachsen (89) herum in eine erste Rotationsrichtung (i) in Bezug auf eine Anfangsposition (A) zu erlauben und Gegenrotation in eine zweite Gegenrotationsrichtung (j) zu blockieren, umfassend einen Generator (70), der für Unterwasserbetrieb geeignet ist, und umfassend einen Rahmen (45), wobei die mindestens zwei Schaufelräder (42) und der Generator (70) innerhalb des Rahmens (45) angeordnet sind und der Rahmen (45) mit Füßen (49) zum Abstützen des Wasserflussenergiewandlers (40) in einem Abstand von einem Kanal-, insbesondere einem Fluss-, Bett bereitgestellt ist und die Länge der Füße (49) ausgewählt ist, sodass der Wasserflussenergiewandler (40) den Oberflächentransfer nicht beeinträchtigt und ein oberer Rahmenabschnitt (46) des Rahmens (45) tiefer liegt als der niedrigste auftretende Wasserpegel des Kanals, insbesondere des Flusses,
**dadurch gekennzeichnet, dass** eine netz- oder gitterartige Schutzabdeckung (41) an dem Rahmen (45) fixiert ist, um die Schaufelräder (42) von der Außenseite zu umgeben.

2. Wasserflussenergiewandler nach Anspruch 1, **dadurch gekennzeichnet, dass** die Schaufelstücke (88) desselben Schaufelsystems (82) in ihrer Anfangsposition (A) entlang einer geraden, gekrümmten oder polygonalen Linie angeordnet sind, die die Welle (44) des Schaufelrads (42) mit einem Umfangspunkt des Schaufelrads (42) verbindet.

3. Wasserflussenergiewandler nach Anspruch 1 oder 2, **dadurch gekennzeichnet, dass** die benachbarten Schaufelstücke (88), die zu demselben Schaufelsystem (82) gehören, angeordnet sind, sodass sie sich in einem Abstand voneinander befinden und dass in der Anfangsposition (A) die freien Enden der Schaufelstücke (88) an Fixierungselemente, vorteilhafterweise Stoppern (90), anstoßen, die Rotation in die zweite Rotationsrichtung (j) blockieren.

4. Wasserflussenergiewandler nach Anspruch 1 oder 2, **dadurch gekennzeichnet, dass** die benachbarten Schaufelstücke (88), die zu einem einzigen Schaufelsystem (82) gehören, miteinander derart verbunden angeordnet sind, dass in der Anfangsposition (A) das freie Ende des Schaufelstücks (88), das von der Welle (44) des Schaufelrads (42) weiter entfernt ist, an dem benachbarten Schaufelelement (88), das näher an der Welle (44) des Schaufelrads (42) ist, an dem an der Achse (89) fixierten Ende anstößt.

5. Wasserflussenergiewandler nach einem der Ansprüche 1 - 4, **dadurch gekennzeichnet, dass** die Schaufelstücke (88) starre oder flexible ebene Platten oder gekrümmte Platten sind.

6. Wasserflussenergiewandler nach einem der Ansprüche 1 - 4, **dadurch gekennzeichnet, dass** die Schaufelstücke (88) tropfenförmige Stücke sind, die an ihrem freien Ende dünner sind.

7. Wasserflussenergiewandler nach einem der Ansprüche 1 - 6, **dadurch gekennzeichnet, dass** mindestens zwei Schaufelräder (42) an der Welle (44) eines Schaufelrads (42) montiert sind.

8. Wasserflussenergiewandler nach einem der Ansprüche 1 - 7, **dadurch gekennzeichnet, dass** er mindestens zwei Schaufelräder (42) mit parallelen Wellen (44), die in einem Abstand voneinander angeordnet sind, wie auch ein Drehmomentübertragungssystem (54), das die Drehmomente der Schaufelräder (42) kombiniert, umfasst, wobei das Drehmomentübertragungssystem (54) ein Zentralrad (56) und Drehmomentübertragungsräder (58) beinhaltet, deren Achsen mit Achsen der Wellen (44) der individuellen Schaufelräder (42) zusammenfallen und die durch die individuellen Schaufelräder (42) angetrieben sind und mit dem Zentralrad (56) in einer Rotationsbewegung übertragenden Weise verbunden sind.

9. Wasserflussenergiewandler nach Anspruch 8, **dadurch gekennzeichnet, dass** von dem Zentralrad (56) und dem Drehmomentübertragungsrad (58) eines ein Zahnrad (60) und das andere ein Rollenrad (62) ist und die Räder (56, 58) derart dimensioniert sind, dass sich Zähne (61) des Zahnrads (60) während Rotierens in Freiräume (64) zwischen Rollen (63) einpassen, die entlang des Umfangs des Rollenrads (62) angeordnet sind.

10. Wasserflussenergiewandler nach den Ansprüchen 8 oder 9, **dadurch gekennzeichnet, dass** das Zentralrad (56) installiert ist, sodass es die Hauptwelle (72) eines Generators (70) antreibt.

11. Wasserflussenergiewandler nach einem der Ansprüche 1 - 10, **dadurch gekennzeichnet, dass** es mindestens zwei Schaufelräder (42) beinhaltet, die in Reihe angeordnet sind, mit parallelen Wellen (44), und Drehmomentübertragungsräder (58) beinhaltet, die miteinander verbunden sind und durch die individuellen Schaufelräder (42) angetrieben sind, und das Drehmomentübertragungsrad (58) eines ersten Schaufelrads (42) von zwei aufeinanderfolgenden Schaufelrädern (42), die in Reihe angeordnet sind, ein Zahnrad (60) ist, während das Drehmomentübertragungsrad (58) des zweiten Schaufelrads (42) ein Rollenrad (62) ist und die Räder (58) derart dimensioniert sind, dass sich Zähne (61) des Zahnrads (60) während Rotierens in Freiräume (64) zwischen Rollen (63) einpassen, die entlang des Umfangs des Rollenrads (62) angeordnet sind.

12. Wasserflussenergiewandler nach einem der Ansprüche 8 - 11, **dadurch gekennzeichnet, dass** mindestens zwei Schaufelräder (42) an der Welle (44) von einem Schaufelrad (42) montiert sind, sodass sie ein gemeinsames Drehmomentübertragungsrad (58) antreiben, dessen Achse mit der Achse der Welle (44) des Schaufelrads (42) zusammenfällt.

## Revendications

1. Convertisseur d'énergie d'écoulement d'eau (40) ayant au moins deux roues à aubes (42) adaptées au montage dans un écoulement d'eau (W), au moins deux systèmes d'aubes (82) étant agencés sur chaque roue à aubes (42), chaque système d'aubes (82) comprenant au moins deux pièces d'aube (88) agencées en série, et les au moins deux pièces d'aube (88) étant montées sur des axes de rotation (89) qui sont parallèles à l'arbre (44) de la roue à aubes (42) et étant espacées de l'arbre (44) de la roue à aubes (42) par des distances différentes de façon à permettre la rotation des pièces d'aube (88) autour des axes de rotation (89) dans un premier sens de rotation (i) par rapport à une position initiale (A) et à bloquer la contre-rotation dans un second sens de rotation inverse (j) comprenant un générateur (70) adapté au fonctionnement subaquatique et comprenant un châssis (45), et les au moins deux roues à aubes (42) et le générateur (70) étant agencés à l'intérieur du châssis (45), et le châssis (45) étant pourvu de pieds (49) pour supporter le convertisseur d'énergie d'écoulement d'eau (40) à une certaine distance du lit d'un chenal, en particulier d'une rivière, et la longueur des pieds (49) étant choisie de sorte que le convertisseur d'énergie d'écoulement d'eau (40) n'affecte pas la navigation en surface et une portion de châssis supérieure (46) du châssis (45) se situant plus profondément que le plus bas niveau d'eau survenant dans le chenal, en particulier la rivière,
**caractérisé en ce qu'**une enveloppe protectrice en forme de filet ou de grille (41) est fixée sur le châssis (45) de façon à entourer les roues à aubes (42) de l'extérieur.

2. Convertisseur d'énergie d'écoulement d'eau selon la revendication 1, **caractérisé en ce que** les pièces d'aube (88) du même système d'aubes (82) sont agencées, dans leur position initiale (A), le long d'une ligne droite, incurvée ou polygonale reliant l'arbre (44) de la roue à aubes (42) à un point périmétrique de la roue à aubes (42).

3. Convertisseur d'énergie d'écoulement d'eau selon la revendication 1 ou 2, **caractérisé en ce que** les pièces d'aube (88) voisines appartenant au même système d'aubes (82) sont agencées de sorte qu'elles se trouvent à une certaine distance les unes des autres, et dans la position initiale (A) les extrémités libres des pièces d'aube (88) sont adjacentes à des éléments de fixation, avantageusement des butées (90), qui bloquent la rotation dans le second sens de rotation (j).

4. Convertisseur d'énergie d'écoulement d'eau selon la revendication 1 ou 2, **caractérisé en ce que** les pièces d'aube (88) voisines appartenant à un système d'aubes (82) unique sont agencées reliées les unes aux autres de sorte que dans la position initiale (A) l'extrémité libre de la pièce d'aube (88) plus éloignée de l'arbre (44) de la roue à aubes (42) est adjacente à l'élément d'aube (88) voisin plus proche de l'arbre (44) de la roue à aubes (42) à l'extrémité fixée à l'axe (89).

5. Convertisseur d'énergie d'écoulement d'eau selon l'une quelconque des revendications 1 à 4, **caractérisé en ce que** les pièces d'aube (88) sont des plaques planes rigides ou souples ou des plaques incurvées.

6. Convertisseur d'énergie d'écoulement d'eau selon l'une quelconque des revendications 1 à 4, **caractérisé en ce que** les pièces d'aube (88) sont des pièces en forme de goutte qui sont plus minces à leur extrémité libre.

7. Convertisseur d'énergie d'écoulement d'eau selon l'une quelconque des revendications 1 à 6, **caractérisé en ce qu'**au moins deux roues à aubes (42) sont montées sur l'arbre (44) d'une roue à aubes (42).

8. Convertisseur d'énergie d'écoulement d'eau selon l'une quelconque des revendications 1 à 7, **caractérisé en ce qu'**il contient au moins deux roues à aubes (42) avec des arbres (44) parallèles agencées à une certaine distance l'une de l'autre, ainsi qu'un système de transfert de couple (54) combinant les couples des roues à aubes (42), le système de transfert de couple (54) contenant une roue centrale (56) et des roues de transfert de couple (58) dont les axes coïncident avec les axes des arbres (44) des roues à aubes (42) individuelles et qui sont entraînées par les roues à aubes (42) individuelles et sont reliées à la roue centrale (56) d'une manière transférant le mouvement de rotation.

9. Convertisseur d'énergie d'écoulement d'eau selon la revendication 8, **caractérisé en ce que** de la roue centrale (56) et de la roue de transfert de couple (58) une est une roue dentée (60) et l'autre est une roue à galets (62), et les roues (56, 58) sont dimensionnées de façon que les dents (61) de la roue dentée (60), pendant qu'elles tournent, s'ajustent dans les espaces (64) entre les galets (63) agencés le long de la circonférence de la roue à galets (62).

10. Convertisseur d'énergie d'écoulement d'eau selon la revendication 8 ou 9, **caractérisé en ce que** la roue centrale (56) est installée de façon à entraîner l'arbre principal (72) d'un générateur (70).

11. Convertisseur d'énergie d'écoulement d'eau selon l'une quelconque des revendications 1 à 10, **caractérisé en ce qu'**il contient au moins deux roues à aubes (42), agencées en série, avec des arbres (44) parallèles et contient des roues de transfert de couple (58) reliées les unes aux autres et entraînées par les roues à aubes (42) individuelles, et la roue de transfert de couple (58) d'une première roue à aubes (42) de deux roues à aubes (42) consécutives agencées en série est une roue dentée (60), tandis que la roue de transfert de couple (58) de la seconde roue à aubes (42) est une roue à galets (62), et les roues (58) sont dimensionnées de façon que les dents (61) de la roue dentée (60), pendant qu'elles tournent, s'ajustent dans les espaces (64) entre les galets (63) agencés le long de la circonférence de la roue à galets (62).

12. Convertisseur d'énergie d'écoulement d'eau selon l'une quelconque des revendications 8 à 11, **caractérisé en ce qu'**au moins deux roues à aubes (42) sont montées sur l'arbre (44) d'une roue à aubes (42) de façon à entraîner une roue de transfert de couple (58) commune, dont l'axe coïncide avec l'axe de l'arbre (44) de la roue à aubes (42).
